# EUROPEAN PATENT APPLICATION

(11) **EP 4 835 513 A1**
(43) Date of publication of application: **04.11.2026**
(21) Application number: 26175111.9
(22) Date of filing: 28.04.2026
(51) Int. Cl.: G01S 7/40, G01S 7/00, G01S 13/42, G01S 13/72, G01S 13/02, G01S 13/44

(54) **REAL-TIME AESA BEAM ERROR CORRECTION USING COOPERATIVE SURVEILLANCE DATA SUCH AS ADS-B**

(30) Priority: 02.05.2025 US 202563798794 P; 06.04.2026 US 202619640013
(71) Applicant: Rockwell Collins, Inc., Omaha, Nebraska 68154 (US)
(72) Inventor: SISHTLA, Venkata, Cedar Rapids, IA, 52402 (US); BILLSBERRY, Mark A., Indialantic, FL, 32903 (US); TEAGUE, Jacob, West Melbourne, FL, 32934 (US)
(74) Representative: Dehns

(57) **Abstract**

A system and method for monitoring pointing errors of a radar system (202) of an aircraft are disclosed. The method may include receiving position data of one or more other platforms (230) via an aircraft controller (102). The method may include tracking the one or more other platforms (230) using the radar system (202) to obtain tracking data. The method may include determining a radar-based angle (206) from the aircraft to the one or more other platforms (230) based on the tracking data. The method may include determining a reference angle from the aircraft to the one or more other platforms (230) based on the position data. The method may include comparing the reference angle with the radar-based angle (206) to determine a difference. The method may include generating an error correctable based on the difference. The method may include adjusting pointing parameters of the radar system (202) based on the error correctable.

## Description

### CROSS-REFERENCE TO RELATED APPLCIATION

The present application claims the benefit under 35 U.S.C. § 119(e) of U.S. Provisional Application Serial Number 63/798,794, filed May 2, 2025.

### STATEMENT REGARDING FEDERALLY SPONSORED RESEARCH OR DEVELOPMENT

This invention was made with government support under FA238423CB004 awarded by the Air Force. The government has certain rights in the invention.

### TECHNICAL FIELD

The present disclosure relates generally to electronically scanned beams, and, more particularly, to correcting for beam pointing errors of electronically scanned beams using cooperative surveillance data.

### BACKGROUND

Multi-scan radars may require antenna pointing precision to be less than 0.25 degrees to achieve satisfactory clutter suppression while preserving weather targets.

Optical rotary encoders are currently used in mechanically-steered radar systems to monitor for any antenna pointing errors. Next generation active electronically scanned array (AESA) based radars steer the beam electronically and therefore do not use such a mechanical optical rotary encoder technology to maintain antenna pointing precision.

Therefore, there is a desire for a system and method to monitor and correct pointing errors in real time when using a multi-scan AESA radar to achieve adequate antenna pointing precision.

Automatic Dependent Surveillance-Broadcast (ADS-B) signals and Automatic Identification System (AIS) signals are examples of cooperative surveillance technologies that broadcast positional and identification information. ADS-B may include a surveillance technology in which vehicles, such as aircraft, periodically broadcast their precise position, velocity, altitude, and other relevant data derived from onboard satellite navigation systems, thereby enabling tracking or monitoring by other equipped platforms. AIS may include a maritime tracking technology where vessels periodically broadcast identification, position, course, speed, and other vessel-specific information, providing situational awareness, collision avoidance, and vessel traffic management in maritime environments. Both ADS-B and AIS may be cooperative, broadcast-based position data reporting systems, where platforms periodically broadcast their positional data and other related parameters without interrogation or radar-based prompting. Such cooperative systems may provide accurate, real-time positional information, enabling improved situational awareness, collision avoidance, traffic management, and various other navigational or operational functions.

### SUMMARY

A method for monitoring pointing errors of a radar system of an aircraft is disclosed in accordance with one or more illustrative embodiments of the present disclosure. In one illustrative embodiment, the method may include receiving position data of one or more other platforms via an aircraft controller. In another illustrative embodiment, the method may include tracking the one or more other platforms using the radar system to obtain tracking data. In another illustrative embodiment, the method may include determining a radar-based angle from the aircraft to the one or more other platforms based on the tracking data. In another illustrative embodiment, the method may include determining a reference angle from the aircraft to the one or more other platforms based on the position data. In another illustrative embodiment, the method may include comparing the reference angle with the radar-based angle to determine a difference. In another illustrative embodiment, the method may include generating an error correctable based on the difference. In another illustrative embodiment, the method may include adjusting pointing parameters of the radar system based on the error correctable.

In a further aspect, the radar system may include an electronically scanned array radar system. In another aspect, the electronically scanned array radar system may include an Active Electronically Scanned Array (AESA) radar system. In another aspect, the position data of the one or more other platforms may include broadcast position data broadcast by the one or more other platforms. In another aspect, tracking the one or more other platforms may include transmitting monopulse beams using the radar system to obtain the tracking data in three dimensions. In another aspect, the reference angle may include an elevation angle, an azimuth angle, or both.

In another aspect, determining the reference angle may include calculating a true angle based on a known altitude of the aircraft, an altitude of at least one of the one or more other platforms based on the position data, and a target range between the aircraft and the at least one of the one or more other platforms. In another aspect, the aircraft controller may be coupled to a navigation system configured to determine at least one of a position or altitude of the aircraft based on at least one of a satellite or a sensor. In another aspect, when multiple other platforms are tracked simultaneously, the method may include performing triangulation using the position data from the multiple other platforms to generate the error correctable.

In another aspect, based on adjusting the pointing parameters, the method may include performing at least one of weather detection, ground clutter suppression, obstacle avoidance, ground incursion, or runway environment mapping. In another aspect, the method may include storing historical error correctables in a memory of the aircraft and establishing a calibration profile for the radar system based on the historical error correctables. In another aspect, the radar system may be configured to be calibrated in real-time during flight operation based on the pointing parameters.

A system for monitoring pointing errors of a radar system of an aircraft is disclosed in accordance with one or more illustrative embodiments of the present disclosure. In one illustrative embodiment, the system may include the radar system configured to track one or more other platforms and obtain tracking data. In another illustrative embodiment, the system may include an aircraft controller. In another illustrative embodiment, the aircraft controller may be configured to receive position data of the one or more other platforms. In another illustrative embodiment, the aircraft controller may be configured to track the one or more other platforms using the radar system to obtain the tracking data. In another illustrative embodiment, the aircraft controller may be configured to determine a radar-based angle from the aircraft to the one or more other platforms based on the tracking data. In another illustrative embodiment, the aircraft controller may be configured to determine a reference angle from the aircraft to the one or more other platforms based on the position data. In another illustrative embodiment, the aircraft controller may be configured to compare the reference angle with the radar-based angle to determine a difference. In another illustrative embodiment, the aircraft controller may be configured to generate an error correctable based on one or more differences. In another illustrative embodiment, the aircraft controller may be configured to adjust pointing parameters of the radar system based on the error correctable.

In a further aspect, the radar system may include an electronically scanned array radar system. In another aspect, the electronically scanned array radar system may include an Active Electronically Scanned Array (AESA) radar system. In another aspect, the position data of the one or more other platforms may include broadcast position data broadcast by the one or more other platforms. In another aspect, the tracking of the one or more other platforms may include transmitting monopulse beams using the radar system to obtain the tracking data in three dimensions. In another aspect, the determining of the reference angle may include calculating a true angle based on a known altitude of the aircraft, an altitude of at least one of the one or more other platforms based on the position data, and a target range between the aircraft and the at least one of the one or more other platforms. In another aspect, the system may include a navigation system configured to determine at least one of a position or altitude of the aircraft based on at least one of a satellite or a sensor. In another aspect, based on the adjusting of the pointing parameters, the system may perform at least one of weather detection, ground clutter suppression, obstacle avoidance, ground incursion, or runway environment mapping.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are exemplary and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims.
FIG. 1A illustrates a simplified block diagram of an aircraft including the system for monitoring pointing errors, in accordance with one or more embodiments of the present disclosure.
FIG. 1B illustrates an aircraft including the system for monitoring pointing errors, in accordance with one or more embodiments of the present disclosure.
FIG. 2 illustrates a simplified diagram of the system and other aircraft nearby, in accordance with one or more embodiments of the present disclosure.
FIG. 3 is a flow diagram illustrating steps performed in a method for monitoring pointing errors, in accordance with one or more embodiments of the present disclosure

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

The intended pointing direction of an electronically-scanned array radar system may be misaligned for a variety of reasons such as mounting structure error, temperature drift over time, degradation of one or more components, or the like. Conventional methods to maintain the pointing direction accuracy include calibration probes installed in the array. However, such methods may be costly and complicated.

Broadly speaking, embodiments of the inventive concepts disclosed herein are directed to a system and method for monitoring and/or correcting for pointing errors of an electronically-scanned array radar system of an ownship platform (e.g., aircraft). In one or more embodiments, position data broadcast from other nearby platforms (e.g., other aircraft) may be received and used to establish a reference angle to these other platforms. For example, broadcast altitude or positional data (e.g., altitude or position data broadcast using ADS-B, AIS, or the like) may be received by the ownship platform from multiple other vehicles and used to geometrically determine a true elevation angle or reference angle from the ownship platform to the other vehicles. Then, the other vehicles may be tracked using the electronically-scanned array radar system, and a radar-based angle to that platform may be determined. The tracking of the other vehicles may be used to determine trajectory data (e.g., heading, speed) of the other vehicles. These vehicles and their positions and trajectories in a single field of view may be used as a collective of data points to converge to a final error correction value of the radar system. In one or more embodiments, the reference angle may, in a sense, be used as a ground truth or a proxy for the ground truth. For example, the reference angle determined from the broadcast data and the radar-based angle determined using the radar system may be compared with each other to determine a difference corresponding to an error signal (e.g., error correctable). The error signal may be indicative of a difference between where the radar system is directed to be pointed and where the radar system is actually pointing. In embodiments, the difference may be determined as a function of the range between the aircraft and the platforms and may include prioritizing the platforms located in multiple quadrants of a field of view of the radar system so that the error correctable converges uniformly. In embodiments, the error signal may be used to correct for (e.g., calibrate for) this error, thereby increasing the accuracy of the pointing of the radar system in the future. In embodiments, the calibrated radar system may then be used for any other purposes, such as for weather detection, ground clutter suppression, detection and avoidance of non-cooperative targets, ground incursion, runway environment mapping, and/or the like. In this way, a broadcast signal from other platforms may improve the accuracy of various other functions utilizing the radar system. Benefits may include, but are not limited to, improved pointing accuracy and reduction or elimination of the need for costly calibration probes.

While ADS-B is used as an example, any non-radar-based position data from a source may be used such as, but not limited to, maritime Automatic Identification System (AIS) or other cooperative position data broadcasts. Thus, the position data used to generate the reference angle may include any suitable cooperative, non-radar-based broadcast source capable of providing position data.

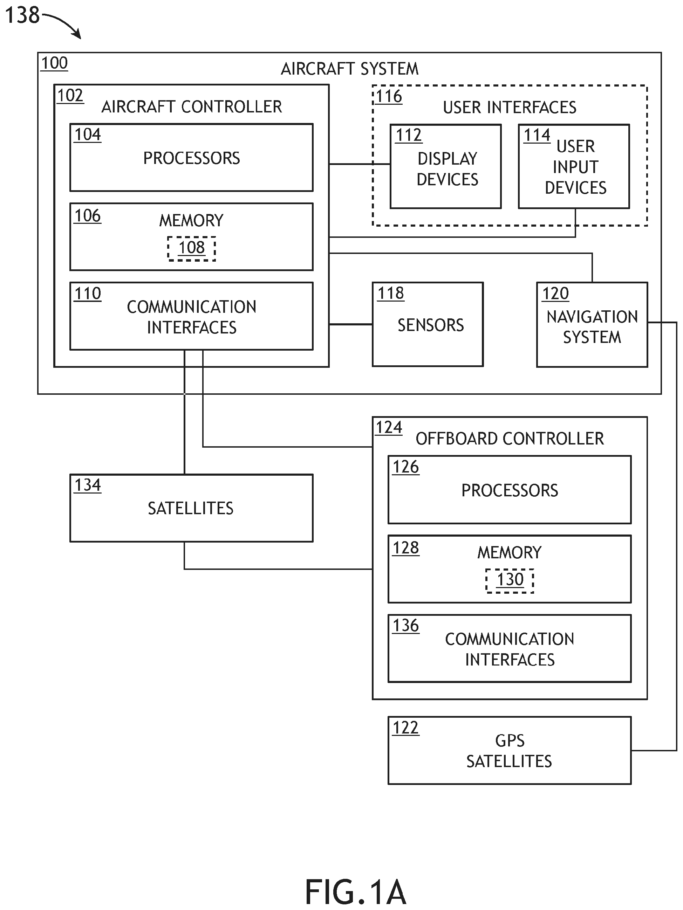

FIGS. 1A-1B illustrate an aircraft 100 including a system 138 for monitoring pointing errors, in accordance with one or more embodiments of the present disclosure.

Referring now to FIG. 1A, the aircraft 100 may include an aircraft controller 102 (e.g., on-board/run-time controller). The aircraft controller 102 may include one or more processors 104, memory 106 configured to store one or more program instructions 108, and/or one or more communication interfaces 110.

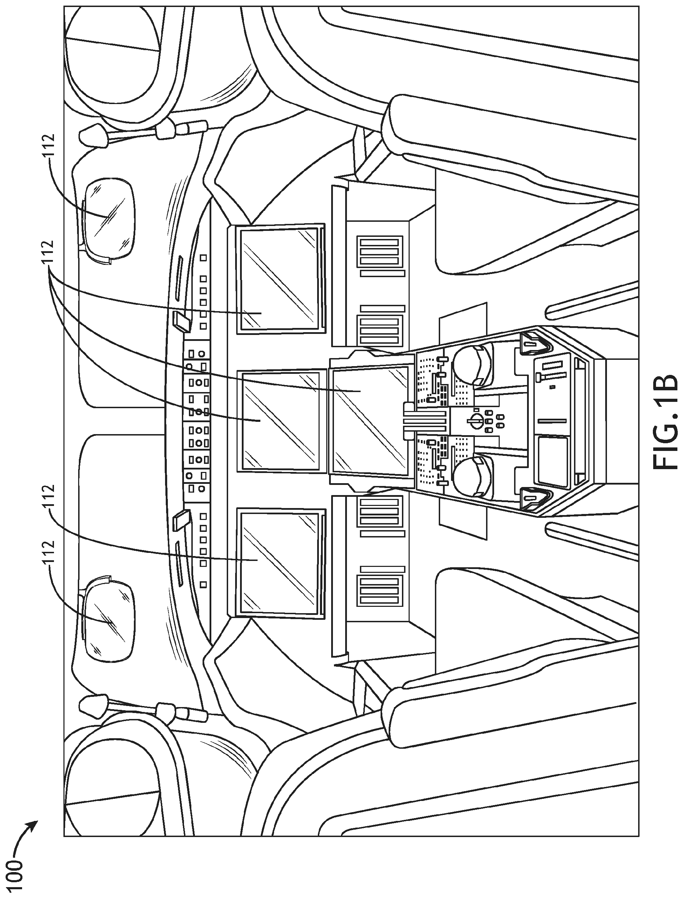

The aircraft 100 may include an avionics environment such as, but not limited to, a cockpit. The aircraft controller 102 may be coupled (e.g., physically, electrically, and/or communicatively) to one or more display devices 112. The one or more display devices 112 may be configured to display three-dimensional images and/or two-dimensional images. Referring now to FIG. 1B, the avionics environment (e.g., the cockpit) may include any number of display devices 112 (e.g., one, two, three, or more displays) such as, but not limited to, one or more head-down displays (HDDs) 112, one or more head-up displays (HUDs), one or more multi-function displays (MFDs), one or more adaptive flight displays (AFDs) 112, one or more primary flight displays (PFDs) 112, or the like. The one or more display devices 112 may be employed to present flight data including, but not limited to, situational awareness data (e.g., radar-based data such as weather data or runway data) and/or flight queue data to a pilot or other crew member. For example, the situational awareness data (e.g., radar-based data) may be based on, but is not limited to, weather charts, detected obstacles, runway, and/or the like.

Referring again to FIG. 1A, the aircraft controller 102 may be coupled (e.g., physically, electrically, and/or communicatively) to one or more user input devices 114. The one or more display devices 112 may be coupled to the one or more user input devices 114. For example, the one or more display devices 112 may be coupled to the one or more user input devices 114 by a transmission medium that may include wireline and/or wireless portions. The one or more display devices 112 may include and/or be configured to interact with one or more user input devices 114.

The one or more display devices 112 and the one or more user input devices 114 may be standalone components within the aircraft 100. It is noted herein, however, that the one or more display devices 112 and the one or more user input devices 114 may be integrated within one or more common user interfaces 116.

Where the one or more display devices 112 and the one or more user input devices 114 are housed within the one or more common user interfaces 116, the aircraft controller 102, one or more offboard controllers 124, and/or the one or more common user interfaces 116 may be standalone components. It is noted herein, however, that the aircraft controller 102, the one or more offboard controllers 124, and/or the one or more common user interfaces 116 may be integrated within one or more common housings or chassis.

The aircraft controller 102 may be coupled (e.g., physically, electrically, and/or communicatively) to and configured to receive data from one or more aircraft sensors 118. The one or more aircraft sensors 118 may be configured to sense a particular condition(s) external or internal to the aircraft 100 and/or within the aircraft 100. The one or more aircraft sensors 118 may be configured to output data associated with particular sensed condition(s) to one or more components/systems onboard the aircraft 100. Generally, the one or more aircraft sensors 118 may include, but are not limited to, one or more inertial measurement units, one or more airspeed sensors, one or more radio altimeters, one or more flight dynamic sensors (e.g., sensors configured to sense pitch, bank, roll, heading, and/or yaw), one or more weather radars, one or more air temperature sensors, one or more surveillance sensors, one or more air pressure sensors, one or more engine sensors, and/or one or more optical sensors (e.g., one or more cameras configured to acquire images in an electromagnetic spectrum range including, but not limited to, the visible light spectrum range, the infrared spectrum range, the ultraviolet spectrum range, or any other spectrum range known in the art).

The aircraft controller 102 may be coupled (e.g., physically, electrically, and/or communicatively) to and configured to receive data from one or more navigational systems 120. The one or more navigational systems 120 may be coupled (e.g., physically, electrically, and/or communicatively) to and in communication with one or more GPS satellites 122, which may provide vehicular location data (e.g., aircraft location data) to one or more components/systems of the aircraft 100. For example, the one or more navigational systems 120 may be implemented as a global navigation satellite system (GNSS) device, and the one or more GPS satellites 122 may be implemented as GNSS satellites. The one or more navigational systems 120 may include a GPS receiver and a processor. For example, the one or more navigational systems 120 may receive or calculate location data from a sufficient number (e.g., at least four) of GPS satellites 122 in view of the aircraft 100 such that a GPS solution may be calculated.

It is noted herein the one or more aircraft sensors 118 may operate as a navigation system 120, being configured to sense any of various flight conditions or aircraft conditions typically used by aircraft and output navigation data (e.g., aircraft location data, aircraft orientation data, aircraft direction data, aircraft speed data, and/or aircraft acceleration data). For example, the various flight conditions or aircraft conditions may include altitude, aircraft location (e.g., relative to the earth), aircraft orientation (e.g., relative to the earth), aircraft speed, aircraft acceleration, aircraft trajectory, aircraft pitch, aircraft bank, aircraft roll, aircraft yaw, aircraft heading, air temperature, and/or air pressure. By way of another example, the one or more aircraft sensors 118 may provide aircraft location data and aircraft orientation data, respectively, to the one or more processors 104, 126.

The aircraft controller 102 of the aircraft 100 may be coupled (e.g., physically, electrically, and/or communicatively) to one or more offboard controllers 124.

The one or more offboard controllers 124 may include one or more processors 126, memory 128 configured to store one or more programs instructions 130 and/or one or more communication interfaces 136.

The aircraft controller 102 and/or the one or more offboard controllers 124 may be coupled (e.g., physically, electrically, and/or communicatively) to one or more satellites 134. For example, the aircraft controller 102 and/or the one or more offboard controllers 124 may be coupled (e.g., physically, electrically, and/or communicatively) to one another via the one or more satellites 134. For instance, at least one component of the aircraft controller 102 may be configured to transmit data to and/or receive data from at least one component of the one or more offboard controllers 124, and vice versa. By way of another example, at least one component of the aircraft controller 102 may be configured to record event logs and may transmit the event logs to at least one component of the one or more offboard controllers 124, and vice versa. By way of another example, at least one component of the aircraft controller 102 may be configured to receive information and/or commands from the at least one component of the one or more offboard controllers 124, either in response to (or independent of) the transmitted event logs, and vice versa.

In some embodiments, it is noted herein that the aircraft 100 and the components onboard the aircraft 100, the one or more offboard controllers 124, the one or more GPS satellites 122, and/or the one or more satellites 134 may be considered components of a system 138, but are not required to be.

The one or more processors 104, 126 may include any one or more processing elements, micro-controllers, circuitry, field programmable gate array (FPGA) or other processing systems, and resident or external memory for storing data, executable code, and other information accessed or generated by the aircraft controller 102 and/or the one or more offboard controllers 124. In this sense, the one or more processors 104, 126 may include any microprocessor device configured to execute algorithms and/or program instructions. It is noted herein, however, that the one or more processors 104, 126 are not limited by the materials from which it is formed or the processing mechanisms employed therein and, as such, may be implemented via semiconductor(s) and/or transistors (e.g., using electronic integrated circuit (IC) components), and so forth. In general, the term "processor" may be broadly defined to encompass any device having one or more processing elements, which execute a set of program instructions from a non-transitory memory medium (e.g., the memory), where the set of program instructions is configured to cause the one or more processors to carry out any of one or more process steps.

The memory 106, 128 may include any storage medium known in the art suitable for storing the set of program instructions executable by the associated one or more processors. For example, the memory 106, 128 may include a non-transitory memory medium. For instance, the memory 106, 128 may include, but is not limited to, a read-only memory (ROM), a random access memory (RAM), a magnetic or optical memory device (e.g., disk), a magnetic tape, a solid state drive, flash memory (e.g., a secure digital (SD) memory card, a mini-SD memory card, and/or a micro-SD memory card), universal serial bus (USB) memory devices, and the like. The memory 106, 128 may be configured to provide display information to the display device (e.g., the one or more display devices 112). In addition, the memory 106, 128 may be configured to store user input information from a user input device of a user interface. The memory 106, 128 may be housed in a common controller housing with the one or more processors. The memory 106, 128 may, alternatively or in addition, be located remotely with respect to the spatial location of the processors and/or a controller. For instance, the one or more processors and/or the controller may access a remote memory (e.g., server), accessible through a network (e.g., internet, intranet, and the like).

The aircraft controller 102 and/or the one or more offboard controllers 124 may be configured to perform one or more process steps, as defined by the one or more sets of program instructions 108, 130. The one or more process steps may be performed iteratively, concurrently, and/or sequentially. The one or more sets of program instructions 108, 130 may be configured to operate via a control algorithm, a neural network (e.g., with states represented as nodes and hidden nodes and transitioning between them until an output is reached via branch metrics), a kernel-based classification method, a Support Vector Machine (SVM) approach, canonical-correlation analysis (CCA), factor analysis, flexible discriminant analysis (FDA), principal component analysis (PCA), multidimensional scaling (MDS), principal component regression (PCR), projection pursuit, data mining, prediction-making, exploratory data analysis, supervised learning analysis, Boolean logic (e.g., resulting in an output of a complete truth or complete false value), fuzzy logic (e.g., resulting in an output of one or more partial truth values instead of a complete truth or complete false value), or the like. For example, in the case of a control algorithm, the one or more sets of program instructions 108, 130 may be configured to operate via proportional control, feedback control, feedforward control, integral control, proportional-derivative (PD) control, proportional-integral (PI) control, proportional-integral-derivative (PID) control, or the like.

The one or more communication interfaces 110, 136 may be operatively configured to communicate with one or more components of the aircraft controller 102 and/or the one or more offboard controllers 124. For example, the one or more communication interfaces 110, 136 may also be coupled (e.g., physically, electrically, and/or communicatively) with the one or more processors 104, 126 to facilitate data transfer between components of the one or more components of the aircraft controller 102 and/or the one or more offboard controllers 124 and the one or more processors 104, 126. For instance, the one or more communication interfaces 110, 136 may be configured to retrieve data from the one or more processors 104, 126, or other devices, transmit data for storage in the memory 106, 128, retrieve data from storage in the memory 106, 128, or the like. By way of another example, the aircraft controller 102 and/or the one or more offboard controllers 124 may be configured to receive and/or acquire data or information from other systems or tools by a transmission medium that may include wireline and/or wireless portions. By way of another example, the aircraft controller 102 and/or the one or more offboard controllers 124 may be configured to transmit data or information (e.g., the output of one or more procedures of the inventive concepts disclosed herein) to one or more systems or tools by a transmission medium that may include wireline and/or wireless portions (e.g., a transmitter, receiver, transceiver, physical connection interface, or any combination). In this regard, the transmission medium may serve as a data link between the aircraft controller 102 and/or the one or more offboard controllers 124 and the other subsystems (e.g., of the aircraft 100 and/or the system 138). In addition, the aircraft controller 102 and/or the one or more offboard controllers 124 may be configured to send data to external systems via a transmission medium (e.g., network connection).

The one or more display devices 112 may include any display device known in the art. For example, the display devices 112 may include, but are not limited to, one or more head-down displays (HDDs), one or more HUDs, one or more multi-function displays (MFDs), or the like. For instance, the display devices 112 may include, but are not limited to, a liquid crystal display (LCD), a light-emitting diode (LED) based display, an organic light-emitting diode (OLED) based display, an electroluminescent display (ELD), an electronic paper (E-ink) display, a plasma display panel (PDP), a display light processing (DLP) display, or the like. Those skilled in the art should recognize that a variety of display devices may be suitable for implementation in the present invention and the particular choice of display device may depend on a variety of factors, including, but not limited to, form factor, cost, and the like. In a general sense, any display device capable of integration with the user input device (e.g., touchscreen, bezel mounted interface, keyboard, mouse, trackpad, and the like) is suitable for implementation in the present invention.

The one or more user input devices 114 may include any user input device known in the art. For example, the user input device 114 may include, but is not limited to, a keyboard, a keypad, a touchscreen, a lever, a knob, a scroll wheel, a track ball, a switch, a dial, a sliding bar, a scroll bar, a slide, a handle, a touch pad, a paddle, a steering wheel, a joystick, a bezel input device, or the like. In the case of a touchscreen interface, those skilled in the art should recognize that a large number of touchscreen interfaces may be suitable for implementation in the present invention. For instance, the display device may be integrated with a touchscreen interface, such as, but not limited to, a capacitive touchscreen, a resistive touchscreen, a surface acoustic based touchscreen, an infrared based touchscreen, or the like. In a general sense, any touchscreen interface capable of integration with the display portion of a display device is suitable for implementation in the present invention. In another embodiment, the user input device may include, but is not limited to, a bezel mounted interface.

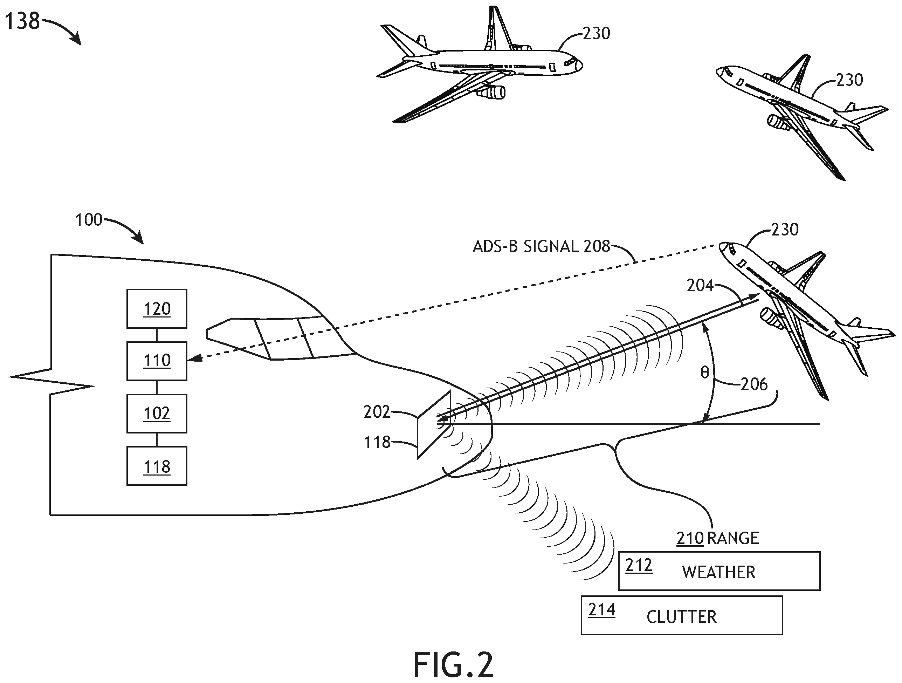

FIG. 2 illustrates a simplified diagram of the system 138 and other platforms 230, in accordance with one or more embodiments of the present disclosure.

The system 138 for monitoring pointing errors of a radar system 202 of the aircraft 100 may include a radar system 202 configured to track the one or more other platforms 230 and thereby obtain tracking data.

The one or more other platforms 230 may include any platforms known in the art of vehicles, such as aircraft, boats, unmanned aerial drones, or the like. For example, the one or more other platforms 230 may include only aircraft.

The system 138 may also include the aircraft controller 102. The aircraft controller 102 may be configured to: receive position data of the one or more other platforms 230; determine a radar-based angle 206 of the one or more other platforms 230 based on the tracking data of the one or more other platforms 230; determine a reference angle to the one or more other platforms 230 based on the position data 208 of the one or more other platforms 230; compare the reference angle with the radar-based angle to determine a difference between the reference angle and the radar-based angle; generate an error correctable based on one or more differences comprising the difference between the reference angle and the radar-based angle; and/or adjust pointing parameters of the radar system 202 based on the error correctable.

The radar system 202 may include any electronically scanned array radar system known in the art, such as an Active Electronically Scanned Array (AESA) radar system. For example, the radar system 202 may be located in the nose of the aircraft 100. The radar system 202 may be a multi-scan radar system configured to perform two or more functions. For example, the functions may include, but are not limited to, obstacle detection, weather detection, clutter suppression, and/or the like.

In embodiments, the radar system 202 may be a multi-function radar system configured to perform multiple radar functions simultaneously or sequentially. For example, multi-function radar functions may include weather detection for identifying precipitation, storm cells, turbulence, wind shear, and/or hail. Additionally, multi-function radar operation may include obstacle detection functions, such as detecting terrain or other obstacles relevant to flight safety. Multi-function radar operation may also include clutter suppression techniques configured to reduce radar returns from ground clutter, sea surface clutter, or other unwanted sources. Such clutter suppression may include Doppler filtering, moving target indication (MTI), adaptive filtering, and/or similar known clutter reduction methods.

The system 138 may be configured to receive the position data 208 of other platforms 230, such as receiving ADS-B position data via the communication interface 110 (e.g., antenna). Although not shown, any intermediary node may be used for the position data, such as a ground station that relays the position data 208 from the other platforms 230 to the communication interface 110.

The system 138 may be configured to transmit radar pulse signals and/or receive corresponding radar return signals 204. For example, as shown, the angle 206 (θ) of such return signals 204 may be measured and/or calculated using an electronically scanned array radar system by measuring the time difference of phase of the signals 204. For instance, three-dimensional tracking of platforms 230 may be performed to determine the elevation angle and/or azimuth angle of the platforms 230.

A range 210 of the objects may also be determined using any known method, such as determined based on a time delay of transmitted and returns signals. Alternatively, and/or in addition, the range may be determined based on a calculated difference between the position of the ownship aircraft 100 and the broadcast position data of the other platform 230.

As shown, the radar system 138 may alternatively and/or simultaneously be used for detected weather 212 and/or suppressing ground clutter 214.

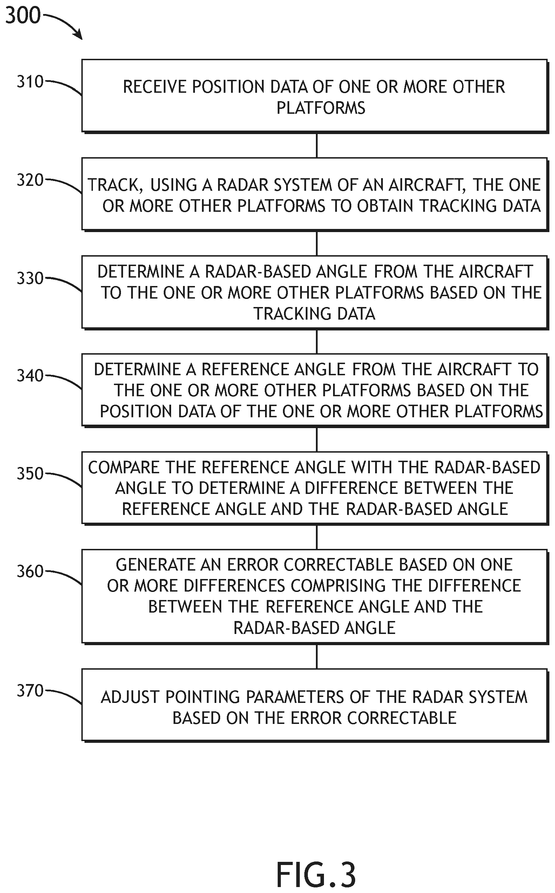

FIG. 3 is a flow diagram illustrating steps performed in a method 300 for monitoring pointing errors, in accordance with one or more embodiments of the present disclosure. It is noted that the embodiments and enabling technologies described previously herein in the context of the system 138 should be interpreted to extend to the method 300. It is further noted herein that the steps of method 300 may be implemented all or in part by system 138. It is further recognized, however, that the method 300 is not limited to the system 138 in that additional or alternative system-level embodiments may carry out all or part of the steps of method 300.

At step 310, position data 208 of one or more other platforms 230 may be received via an aircraft controller 102 of the aircraft 100. The position data 208 from the one or more other platforms 230 may include broadcast position data 208 broadcast by the one or more other platforms 230. While ADS-B data is used as an example, any non-radar-based position data from a source may be used such as, but not limited to, maritime Automatic Identification System (AIS) or other cooperative navigation data broadcasts. Thus, the position data 208 used to generate a reference angle may include any suitable cooperative, non-radar-based broadcast source capable of providing position data.

At step 320, the one or more other platforms 230 may be tracked using the radar system 202 of the aircraft 100 to obtain tracking data. Tracking the one or more other platforms 230 may include transmitting radar signals 204 such as monopulse beams using the radar system 202 to obtain the tracking data in three dimensions.

The radar system 202 may be configured for any suitable radar tracking configured to identify, track, and monitor the position and/or movement of the one or more other platforms 230. For example, tracking performed by the radar system 202 may include transmitting radar signals toward the one or more other platforms 230 and receiving corresponding reflected signals returned from the platforms 230, thereby facilitating detection and continuous monitoring of their positions, velocities, trajectories, and/or other movement parameters. In embodiments, tracking performed by the radar system 202 may include monopulse radar techniques. Monopulse radar tracking may include simultaneously transmitting radar energy toward the one or more other platforms 230 using multiple antenna beams or antenna elements arranged to form overlapping antenna patterns, and subsequently receiving reflected signals via these multiple antenna elements or beams. Monopulse radar tracking may include processing and comparing amplitude, phase, or both from signals received by the separate antenna elements to determine precise angular positioning, including azimuth and elevation angles, of the one or more other platforms 230 relative to the radar system 202. Tracking data obtained by the radar system 202 may include measured parameters such as range, azimuth angle, elevation angle, radial velocity, closure rates, or combinations thereof of each of the other platforms 230 relative to the aircraft 100. Additionally, the radar system 202 may implement tracking algorithms, including Kalman filtering or the like to enhance the accuracy and continuity of tracking data.

At step 330, a radar-based angle from the aircraft to the one or more other aircraft is determined based on the tracking data. In embodiments, the radar-based angle may be derived based on amplitude comparisons, phase comparisons, or both amplitude and phase comparisons of radar return signals. Additionally, determination of the radar-based angle may include signal processing techniques such as beamforming, interferometric processing, or other angle estimation algorithms.

At step 340, a reference angle to the one or more other platforms 230 may be determined via the aircraft controller 102 of the aircraft 100 based on the position data of the one or more other platforms 230. The reference angle may include an elevation angle, an azimuth angle, or both. The determining of the reference angle may include calculating a true angle based on a known altitude of the aircraft 100, an altitude of at least one of the one or more other platforms 230 based on the position data, and a target range 210 between the aircraft 100 and the at least one of the one or more other platforms 230.

Determining the reference angle may include calculating angular measurements using basic geometric relationships based on known positional information of both the ownship aircraft 100 and the one or more other platforms 230. For example, determining the reference angle may involve defining a simplified Cartesian coordinate system, where the ownship aircraft 100 and the one or more other platforms 230 each have known positions and altitudes. In embodiments, the aircraft controller 102 may first calculate a horizontal planar distance between the ownship aircraft 100 and the one or more other platforms 230 based on their known latitude and longitude coordinates. Additionally, the vertical distance between the two platforms may be calculated by subtracting the altitude of the ownship aircraft 100 from the altitude of the other platform 230. Once the horizontal and vertical distance components are known, simple geometric relationships may be applied. Specifically, the elevation angle may be computed by taking the inverse tangent (arctangent) of the vertical distance divided by the horizontal distance. Similarly, the azimuth angle may be computed by taking the inverse tangent (arctangent) of lateral position offsets (such as differences in longitude and latitude converted into respective Cartesian coordinates) relative to a defined reference heading or axis. Such computations may utilize standard and well-established trigonometric functions and relationships commonly known in the art.

A known position and/or known altitude of the ownship aircraft 100 may be determined via any method known in the art. For example, the system 138 may be configured to receive such information using one or more sources such as sensors 118 (e.g., altimeters), navigation systems 120 (e.g., GPS communication systems), communication interfaces 110 configured to receive ownship position data from a ground station, and/or the like. For example, the aircraft controller 102 may be coupled to a navigation system 120 configured to determine at least one of a position or altitude of the aircraft 100 based on at least one of a satellite or a sensor 118.

At step 350, the reference angle may be compared with the radar-based angle via the aircraft controller 102 of the aircraft 100 to determine a difference (i.e., angular difference) between the reference angle and the radar-based angle.

When multiple other platforms 230 are tracked simultaneously, the method may further include performing triangulation using the position data from the multiple other platforms 230 to generate two or more differences. These two or more differences may be used to generate an error correctable, such as taking an average or the like.

The method 300 may further include (e.g., the comparing of step 350 may further include) weighting the one or more differences based on the range 210 between the aircraft 100 and each of the one or more other platforms 230. Such weighting may include assigning a larger numerical influence to a difference associated with a smaller range 210 and assigning a smaller numerical influence to a difference associated with a larger range 210. The weighting may include calculating a weighting factor as an inverse function of the range 210, an exponential function of the range 210, or another mathematical relationship that may increase the influence of the difference when the range 210 is relatively small and decrease the influence of the difference when the range 210 is relatively large, thereby allowing the error correctable generated in step 360 to rely more heavily on angular information that may be inherently more accurate.

The method 300 may further include (e.g., the comparing of step 350 may further include) prioritizing the one or more other platforms 230 located in different quadrants of a field of view of the radar system 202 so that the error correctable generated in step 360 may uniformly represent pointing characteristics across the field of view. The prioritizing may include scheduling radar scans that may direct the radar system 202 toward the one or more other platforms 230 in a first quadrant, a second quadrant, a third quadrant, and a fourth quadrant in a sequential or interleaved manner that may differ from scheduling criteria used for Detect and Avoid scans. The prioritizing may include ensuring that at least one of the one or more other platforms 230 in each quadrant provides position data 208 and tracking data obtained in step 320 so that the one or more differences used in step 350 are spatially distributed, thereby allowing the error correctable generated in step 360 to converge using data points that represent the entire radar field of view.

At step 360, an error correctable based on one or more differences comprising the difference between the reference angle and the radar-based angle may be generated via the aircraft controller 102 of the aircraft 100.

Generating the error correctable at step 360 may include determining any suitable correction value, offset value, calibration adjustment, or the like derived from the difference between the radar-based angle and the reference angle. In embodiments, generating the error correctable may include converting the angular difference into a correction factor or offset value that may be directly applied to the radar system 202. For example, the aircraft controller 102 may generate a numerical angular offset representing the magnitude and direction (positive or negative) of the angular difference. Alternatively, or additionally, the error correctable may include generating a correction matrix, calibration lookup table, or transfer function configured to map measured angular differences into corresponding radar pointing corrections or adjustments. In the case where multiple other platforms 230 are tracked simultaneously, generating the error correctable may further include combining or aggregating multiple angular differences obtained from each of the tracked platforms 230. For instance, aggregation may include calculating an average, median, weighted average, or similar statistical combination of multiple angular differences to derive a representative correction value.

At step 370, pointing parameters of the radar system 202 may be adjusted based on the error correctable. This step may be part of, or define, a calibration step.

The pointing parameters of the radar system 202 may be adjusted in real-time based on the error correctable. For example, the radar system 202 may be configured to be calibrated in real-time based on the pointing parameters.

Adjusting pointing parameters of the radar system 202 based on the error correctable may include performing any suitable calibration, alignment, or tuning process configured to reduce or eliminate the determined angular differences in radar pointing. For example, adjusting pointing parameters may include directly applying the generated correction factor, angular offset, or calibration value to radar system control parameters. Such pointing parameters may include antenna steering commands, beam steering angles, electronically scanned array phase settings, or similar radar pointing control variables. Alternatively, or additionally, adjusting pointing parameters may include updating or modifying radar control algorithms, calibration lookup tables, or antenna pointing models based on the error correctable. In embodiments where the radar system 202 includes an electronically scanned array radar, adjusting pointing parameters may include modifying phase shifter settings, amplitude weighting factors, or element excitation values to steer the radar beam accurately toward intended targets. Adjusting pointing parameters may be performed in real-time or near-real-time, enabling the radar system 202 to continuously maintain accurate pointing alignment during flight operations. Alternatively, adjusting pointing parameters may be performed periodically, such as at predetermined intervals or upon detection of angular errors exceeding a specified threshold.

At an optional step, based on the adjusting of the pointing parameters, the method may further include performing at least one of: weather detection of weather 212, ground clutter suppression of clutter 214, obstacle avoidance, ground incursion, or runway environment mapping. In this way, the improved accuracy of the radar system 202 may be used for other, distinct purposes. For example, the system 138 may be configured to perform ground clutter suppression based on the pointing parameters.

The method 300 may further include storing historical error correctables in a memory 106 of the aircraft 100 and establishing a calibration profile for the radar system 202 based on the historical error correctables.

The method 300 may further include certifying an integrity of the radar system 202 based on the steps of method 300. For example, the improved accuracy afforded by method 300 may provide the requisite threshold accuracy and reliability needed to be certified for one or more uses, such as high integrity uses.

The method 300 may further include displaying, on a display 112, data derived from a radar function performed using the pointing parameters. For example, data indicative of the weather 212 may be displayed on the display 112. For example, data indicative of a runway based on a suppression of clutter 214 may be displayed on the display 112.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "in embodiments", "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A method for monitoring pointing errors of a radar system (202) of an aircraft, the method comprising:
receiving, via an aircraft controller (102) of the aircraft, position data of one or more other platforms (230);
tracking, using the radar system (202) of the aircraft, the one or more other platforms (230) to obtain tracking data;
determining, via the aircraft controller (102) of the aircraft, a radar-based angle (206) from the aircraft to the one or more other platforms (230) based on the tracking data;
determining, via the aircraft controller (102) of the aircraft, a reference angle from the aircraft to the one or more other platforms (230) based on the position data of the one or more other platforms (230);
comparing, via the aircraft controller (102) of the aircraft, the reference angle with the radar-based angle (206) to determine a difference between the reference angle and the radar-based angle (206);
generating, via the aircraft controller (102) of the aircraft, an error correctable based on one or more differences comprising the difference between the reference angle and the radar-based angle (206); and
adjusting pointing parameters of the radar system (202) based on the error correctable.

2. The method of claim 1, wherein the radar system (202) comprises an electronically scanned array radar system, and optionally wherein the electronically scanned array radar system comprises an Active Electronically Scanned Array, AESA, radar system.

3. The method of claim 1 or 2, wherein the position data from the one or more other platforms (230) comprises broadcast position data broadcast by the one or more other platforms (230).

4. The method of any preceding claim, wherein tracking the one or more other platforms (230) comprises transmitting monopulse beams using the radar system (202) to obtain the tracking data in three dimensions.

5. The method of any preceding claim, wherein the reference angle comprises an elevation angle, an azimuth angle, or both.

6. The method of any preceding claim, wherein the determining of the reference angle comprises calculating a true angle based on a known altitude of the aircraft, an altitude of at least one of the one or more other platforms (230) based on the position data, and a target range between the aircraft and the at least one of the one or more other platforms (230), and optionally wherein the aircraft controller (102) is coupled to a navigation system configured to determine at least one of a position or altitude of the aircraft based on at least one of a satellite or a sensor.

7. The method of any preceding claim, wherein, when multiple other platforms (230) are tracked simultaneously, the method further comprises performing triangulation using the position data from the multiple other platforms (230) to generate the error correctable.

8. The method of any preceding claim, further comprising, based on the adjusting the pointing parameters, performing at least one of: weather detection, ground clutter suppression, obstacle avoidance, ground incursion, or runway environment mapping.

9. The method of any preceding claim, further comprising storing historical error correctables in a memory of the aircraft and establishing a calibration profile for the radar system (202) based on the historical error correctables.

10. The method of any preceding claim, wherein the radar system (202) is configured to be calibrated in real-time during flight operation based on the pointing parameters.

11. A system for monitoring pointing errors of a radar system (202) of an aircraft, comprising:
the radar system (202) configured to track one or more other platforms (230) and obtain tracking data; and
an aircraft controller (102) configured to:
receive position data of the one or more other platforms (230);
track, using the radar system (202) of the aircraft, the one or more other platforms (230) to obtain the tracking data;
determine a radar-based angle (206) from the aircraft to the one or more other platforms (230) based on the tracking data of the one or more other platforms (230) based on the radar system (202);
determine a reference angle from the aircraft to the one or more other platforms (230) based on the position data of the one or more other platforms (230);
compare, via the aircraft controller (102) of the aircraft, the reference angle with the radar-based angle (206) to determine a difference between the reference angle and the radar-based angle (206);
generate, via the aircraft controller (102) of the aircraft, an error correctable based on one or more differences comprising the difference between the reference angle and the radar-based angle (206); and
adjust pointing parameters of the radar system (202) based on the error correctable.

12. The system of claim 11, wherein the radar system (202) comprises an electronically scanned array radar system, and optionally wherein the electronically scanned array radar system comprises an Active Electronically Scanned Array, AESA, radar system.

13. The system of claim 11 or 12, wherein the position data from the one or more other platforms (230) comprises broadcast position data broadcast by the one or more other platforms (230).

14. The system of claim 11, 12 or 13, wherein the tracking of the one or more other platforms (230) comprises transmitting monopulse beams using the radar system (202) to obtain the tracking data in three dimensions.

15. The system of claim 11, 12, 13 or 14, wherein the determining of the reference angle comprises calculating a true angle based on a known altitude of the aircraft, an altitude of at least one of the one or more other platforms (230) based on the position data, and a target range between the aircraft and the at least one of the one or more other platforms (230), and optionally wherein the system further comprises a navigation system configured to determine at least one of a position or altitude of the aircraft based on at least one of a satellite or a sensor; and/or further comprising, based on the adjusting of the pointing parameters, performing at least one of: weather detection, ground clutter suppression, obstacle avoidance, ground incursion, or runway environment mapping.
